# EUROPEAN PATENT APPLICATION

(11) **EP 4 212 577 A1**
(43) Date of publication of application: **19.07.2023**
(21) Application number: 21866850.7
(22) Date of filing: 10.09.2021
(51) Int. Cl.: C08J 3/22, C08L 101/00, C08F 2/44

(54) **ADDITIVE FOR RESIN KNEADING**

(30) Priority: 11.09.2020 JP 2020153318
(71) Applicant: Osaka Gas Chemicals Co., Ltd., Osaka-shi, Osaka 550-0023 (JP)
(72) Inventor: FUKUHARA, Kazuki, Osaka-shi, Osaka 550-0023 (JP); OSHIMA, Junji, Osaka-shi, Osaka 550-0023 (JP); KUROKAWA, Noriaki, Osaka-shi, Osaka 550-0023 (JP)
(74) Representative: SSM Sandmair
(86) International application number: PCT/JP2021/033243
(87) International publication number: WO 2022/054893

(57) **Abstract**

An additive for resin kneading contains an organic ultraviolet absorber and/or a radical scavenger, and a polymer having the organic ultraviolet absorber and/or the radical scavenger dispersed. The additive for resin kneading is in the form of powder particles. The additive for resin kneading has a median size of 1 µm or more and 100 µm or less. A percentage of the total amount of the organic ultraviolet absorber and the radical scavenger in the additive for resin kneading is 20% by mass or more and 70 % by mass or less. The polymer is a copolymer of a vinyl monomer component that contains a monofunctional vinyl monomer containing only one polymerizable carbon-carbon double bond per molecule, and a polyfunctional vinyl monomer containing two or more polymerizable carbon-carbon double bonds per molecule. A percentage of the monofunctional vinyl monomer in the total amount of the monofunctional vinyl monomer and the polyfunctional vinyl monomer is 10% by mass or more and 95% by mass or less.

## Description

### TECHNICAL FIELD

The present invention relates to an additive for resin kneading.

### BACKGROUND ART

Particles having an ultraviolet absorber and polymers that disperse the ultraviolet absorber have been known (ref: for example, Patent Document 1 below). The particles of Patent Document 1 are dispersed in water to prepare an aqueous polymer dispersion. The particles of Patent Document 1 have an average particle diameter of less than 1000 nm. The ultraviolet absorber of Patent Document 1 is, for example, solid at room temperature (25°C), and specifically, contains 2-(2'-hydroxyphenyl)benzotriazole. Further, the particles of Patent Document 1 are added to a coating material.

### Citation List

### Patent Document

Patent Document 1: Japanese Unexamined Patent Publication No. 2015-091980

### SUMMARY OF THE INVENTION

### PROBLEM TO BE SOLVED BY THE INVENTION

However, when an attempt is made to obtain particles by drying the aqueous polymer dispersion described in Patent Document 1, the particles tend to be firmly agglomerated together during drying because the average particle diameter of the particles is less than 1000 nm. Even though such dried agglomerated particles are added to resins, the agglomeration is hardly eliminated. For this reason, there is a problem in that light resistance of the resulting resin molded article cannot be sufficiently improved.

On the other hand, a proposal has been considered to increase the average particle diameter of the particles. However, when an attempt is made to add such particles to resins to mold a resin molded article, the resulting resin molded article may have an insufficient strength.

Further, the ultraviolet absorber in the particles is required to have a predetermined concentration.

Further, when the particles are added to resins and the resins are kneaded to mold a resin molded article, it is required to suppress bleeding of the ultraviolet absorber due to deformation of the particles. Bleeding is a phenomenon in which an ultraviolet absorber leaks (is released) out of the resin molded article.

The present invention provides an additive for resin kneading, the additive capable of suppressing agglomeration, imparting excellent ultraviolet ray absorbing property and/or deterioration-preventing property to a resin molded article, and suppressing deterioration in strength of and bleeding from the resin molded article.

### MEANS FOR SOLVING THE PROBLEM

The present invention (1) includes an additive for resin kneading including an organic ultraviolet absorber and/or a radical scavenger; and a polymer having the organic ultraviolet absorber and/or the radical scavenger dispersed, the additive for resin kneading being in powder particle form, and having a median size of 1 µm or more and 100 µm or less, in which a percentage of a total amount of the organic ultraviolet absorber and the radical scavenger in the additive for resin kneading is 20% by mass or more and 70 % by mass or less, the polymer is a copolymer of a vinyl monomer component that contains a monofunctional vinyl monomer containing only one polymerizable carbon-carbon double bond per molecule, and a polyfunctional vinyl monomer containing two or more polymerizable carbon-carbon double bonds per molecule, and a percentage of the monofunctional vinyl monomer in a total amount of the monofunctional vinyl monomer and the polyfunctional vinyl monomer is 10% by mass or more and 95% by mass or less.

The present invention (2) includes the additive for resin kneading described in (1), in which the percentage of the monofunctional vinyl monomer is 55% by mass or more.

The present invention (3) includes the additive for resin kneading described in (1) or (2), in which the median size is 5 µm or more and 30 µm or less.

### EFFECTS OF THE INVENTION

The additive for resin kneading according to the present invention can suppress agglomeration, impart excellent ultraviolet ray absorbing property and/or deterioration-preventing property to a resin molded article, and suppress deterioration in strength of and bleeding from the resin molded article.

### BRIEF DESCRIPTION OF THE DRAWINGS

FIG. 1 shows an image-processed SEM photograph of an additive for resin kneading of Example 1.
FIG. 2 shows an image-processed SEM photograph of an additive for resin kneading of Comparative Example 6.
FIG. 3 shows an image-processed SEM photograph of an additive for resin kneading of Comparative Example 7.

### DESCRIPTION OF THE EMBODIMENTS

The additive for resin kneading according to the present invention is in the form of powder particles. That is, it is not in the form of water-dispersible particles which are dispersed in water. Specifically, the additive for resin kneading is in the form of powder particles obtained by drying an aqueous dispersion in which water-dispersible particles are dispersed.

The shape of the additive for resin kneading is not particularly limited. Examples of the additive for resin kneading include a generally spherical shape and a deformed shape. Examples of the generally spherical shape include a true spherical shape and a spheroidal shape. The spherical shape includes a shape having an uneven surface.

The additive for resin kneading has a median size of 1 µm or more and 100 µm or less. The additive for resin kneading has a median size of preferably 3 µm or more, more preferably 5 µm or more, even more preferably 10 µm or more, particularly preferably 15 µm or more. Further, the additive for resin kneading has a median size of preferably 90 µm or less, more preferably 75 µm or less, even more preferably 50 µm or less, particularly preferably 30 µm or less.

When the median size of the additive for resin kneading is less than the above-described lower limit, the additive easily agglomerates. Even though the agglomerated additive for resin kneading is added to a resin, the agglomeration is hardly eliminated. For this reason, light resistance of the resin molded article cannot sufficiently be improved.

On the other hand, when the median size of the additive for resin kneading exceeds the above-described upper limit, addition of such additive for resin kneading to a resin causes extreme concentration of stress applied on the resulting resin molded article, and therefore, the strength of the resin molded article becomes insufficient.

The median size of the additive for resin kneading is measured by a particle size distribution measuring apparatus. Specifically, the median size of the additive for resin kneading is determined by measuring an aqueous dispersion (including a suspension) containing the additive for resin kneading by a laser diffraction scattering type particle size distribution measuring apparatus. Alternatively, the median size of the additive for resin kneading can also be measured without using water, and is measured by, for example, a particle image analysis system.

This additive for resin kneading contains an organic ultraviolet absorber and/or a radical scavenger, and a polymer.

The organic ultraviolet absorber and the radical scavenger do not have, for example, a polymerizable functional group. Specifically, the organic ultraviolet absorber and the radical scavenger each do not contain a polymerizable carbon-carbon double bond per molecule. When the organic ultraviolet absorber and the radical scavenger have a polymerizable functional group, the polymerizable functional group is copolymerized with a vinyl monomer component to be described later, and then incorporated in a polymer chain, which may cause reduction in releasability. However, in the present embodiment, since the organic ultraviolet absorber and the radical scavenger do not have a polymerizable functional group, it is possible to suppress the reduction in releasability caused by the incorporation of the polymerizable functional group in the polymer chain as described above.

The organic ultraviolet absorber absorbs ultraviolet rays to reduce the amount of ultraviolet rays with which the resin is directly irradiated. The nature of the organic ultraviolet absorber at 25°C is not particularly limited. Examples of the nature of the organic ultraviolet absorber at 25°C include a solid state and a liquid state. For the nature of the organic ultraviolet absorber at 25°C, a solid state is preferable in view of suppressing excessive release of the organic ultraviolet absorber to the resin to thereby improve light resistance of the resin molded article for a long period of time. Examples of the organic ultraviolet absorber include benzophenone-based ultraviolet absorber, benzotriazole-based ultraviolet absorber, triazine-based ultraviolet absorber, salicylate ester-based ultraviolet absorber, and cyanoacrylate-based ultraviolet absorber. These can be used alone or in combination.

Examples of the benzophenone-based ultraviolet absorber include dihydroxybenzophenone, tetrahydroxybenzophenone, 2-hydroxy-4-methoxybenzophenone, dihydroxydimethoxybenzophenone, 2-hydroxy-4-n-octyloxybenzophenone (ADK STAB 1413, manufactured by ADEKA Corporation), 2-hydroxy-4-n-dodecyloxybenzophenone, 2,2'-dihydroxy-4-octyloxybenzophenone, and 2,2'-dihydroxy-4-butyloxybenzophenone. For the benzophenone-based ultraviolet absorber, preferably, ADK STAB 1413 is used in view of high versatility.

Examples of the benzotriazole-based ultraviolet absorber include 2-(2'-hydroxy-5'-methylphenyl)benzotriazole, 2-(2H-benzotriazol-2-yl)-4,6-bis(1-methyl-1-phenylethyl)phenol, C7-C9-alkyl-[3-(2H-benzotriazol-2-yl)-5-(1,1-dimethylethyl)-4-hydroxyphenyl]propionate (Tinuvin 99-2, manufactured by BASF), and 2-(2'-hydroxy-3'-tert-butyl-5'-methylphenyl)-5-chlorobenzotriazole (JF-79, manufactured by Johoku Chemical Co., Ltd.). For the benzotriazole-based ultraviolet absorber, preferably, Tinuvin 99-2 and JF-79 are used in view of high versatility.

Examples of the triazine-based ultraviolet absorber include 2,4,6-tris(2-hydroxy-4-hexanoyloxy-3-methylphenyl)-1,3,5-triazine, 2-(4,6-diphenyl-1,3,5-triazine-2-yl)-5-[2-(2-ethylhexanoyloxy)ethoxy]phenol, 2,4-bis(2-hydroxy-4-butyloxyphenyl)-6-(2,4-bis-butyloxyphenyl)-1,3,5-triazine (Tinuvin 460, manufactured by BASF), and 2-hydroxyphenyl-s-triazine (Tinuvin 477, manufactured by BASF). For the triazine-based ultraviolet absorber, preferably, Tinuvin 460 and Tinuvin 477 are used in view of high versatility.

Examples of the salicylate ester-based ultraviolet absorber include 4-octylphenyl salicylate, bisphenol A-disalicylate, 4-t-butylphenyl salicylate, and phenyl salicylate.

Examples of the cyanoacrylate-based ultraviolet absorber include ethyl-2-cyano-3,3-diphenylacrylate, and 2-ethylhexyl-2-cyano-3,3-diphenylacrylate.

For the organic ultraviolet absorber, preferably, a benzophenone-based ultraviolet absorber, a benzotriazole-based ultraviolet absorber, and a triazine-based ultraviolet absorber are used.

The radical scavenger scavenges alkyl radicals and/or peroxy radicals that are formed due to the resin receiving ultraviolet rays. The nature of the radical scavenger at 25°C is not particularly limited. Examples of the nature of the radical scavenger at 25°C include a solid state and a liquid state. For the nature of the radical scavenger at 25°C, a solid state is preferable in view of suppressing excessive release of the radical scavenger to the resin to thereby improve light resistance of the resin molded article for a long period of time. Examples of the radical scavenger include hindered amine-based radical scavengers (HALS) (hindered amine light stabilizers), and hindered phenol-based radical scavengers. These can be used alone or in combination.

Examples of the hindered amine-based radical scavenger include ester of 1,2,3,4-butanetetracarboxylic acid with 1,2,2,6,6-pentamethyl-4-piperidinol and β,β,β',β'-tetramethyl-2,4,8,10-tetraoxaspiro[5.5]undecane-3,9-diethanol (ADK STAB LA-63P, manufactured by ADEKA Corporation), bis(1,2,2,6,6-pentamethyl-4-piperidinyl) sebacate (Tinuvin 292, manufactured by BASF), bis(2,2,6,6-tetramethyl-4-piperidyl) sebacate (JF-90, manufactured by Johoku Chemical Co., Ltd.), (tetrakis(1,2,2,6,6-pentamethyl-4-piperidyl) butane-1,2,3,4-tetracarboxylate (ADK STAB LA-52, manufactured by ADEKA Corporation), and tetrakis(2,2,6,6-tetramethyl-4-piperidyl) butane-1,2,3,4-tetracarboxylate (ADK STAB LA-57, manufactured by ADEKA Corporation). For the hindered amine-based radical scavenger, preferably, ADK STAB LA-63P, Tinuvin 292, and JF-90 are used in view of high versatility.

Examples of the hindered phenol-based radical scavenger include 2,6-di(tert-butyl)-4-methylphenol (also known as dibutylhydroxytoluene, hereinafter abbreviated as BHT in some cases), pentaerythritol tetrakis[3-(3,5-di-tert-butyl-4-hydroxyphenyl)propionate] (Irganox 1010, manufactured by BASF), and octadecyl 3-(3,5-di-tert-butyl-4-hydroxyphenyl)propionate (Irganox 1076, manufactured by BASF). For the hindered phenol-based radical scavenger, preferably, Irganox 1010 is used in view of high versatility.

A percentage of the total amount of the organic ultraviolet absorber and the radical scavenger in the additive for resin kneading is 20% by mass or more and 70% by mass or less. Further, the percentage of the total amount of the organic ultraviolet absorber and the radical scavenger in the additive for resin kneading is preferably 22.5% by mass or more, more preferably 25% by mass or more, and preferably 65% by mass or less, more preferably 60% by mass or less, even more preferably 55% by mass or less, particularly preferably 50% by mass or less. The total parts by mass of the organic ultraviolet absorber and the radical scavenger relative to 100 parts by mass of the polymer is, for example, 25 parts by mass or more, preferably 33 parts by mass or more and for example, 233 parts by mass or less, preferably 200 parts by mass or less.

When the percentage of the total amount and/or the total parts by mass of the organic ultraviolet absorber and the radical scavenger is/are less than the above-described lower limit, a large amount of the additive for resin kneading needs be added to the resin in order to ensure ultraviolet absorption capacity and/or radical scavenging capacity in the resin molded article. This reduces the proportion of the resin in the resin molded article. Therefore, the resin molded article cannot exhibit sufficient performance inherent in resin. The performance includes strength.

On the one hand, it is difficult to produce an additive for resin kneading in which the percentage of the total amount and/or the total parts by mass of the organic ultraviolet absorber and the radical scavenger exceed(s) the above-described upper limit. Specifically, if the organic ultraviolet absorber and the radical scavenger are liquid at 25°C, particles in large amounts of the organic ultraviolet absorber and the radical scavenger are mutually fused, thus making it difficult to obtain the additive for resin kneading in the form of powder particles. On the other hand, if the organic ultraviolet absorber and the radical scavenger are solid at 25°C, they cannot be sufficiently dissolved mutually with a vinyl monomer component to be described next, and therefore, polymerization stability is poor, thus making it impossible to form copolymers. Therefore, the additive for resin kneading cannot be obtained.

The percentage of the total amount of the organic ultraviolet absorber and the radical scavenger is determined by extracting the total amount of the organic ultraviolet absorber and the radical scavenger from the additive for resin kneading using a solvent, and quantifying the extract. Operations of extraction and quantification will be described in detail in Examples below.

The polymer is a copolymer of a vinyl monomer component. The vinyl monomer component includes a monofunctional vinyl monomer and a polyfunctional vinyl monomer.

The monofunctional vinyl monomer contains only one polymerizable carbon-carbon double bond per molecule. Examples of the monofunctional vinyl monomer include (meth)acrylic acid ester monomers, aromatic vinyl monomers, nitrile monomers, vinyl ester monomers, maleic acid ester monomers, and vinyl halides. These monofunctional vinyl monomers can be used alone or in combination. For the monofunctional vinyl monomer, preferably, a (meth)acrylic acid ester monomer and an aromatic vinyl monomer are used.

The (meth)acrylic acid ester monomer refers to (meth)acrylic acid ester and/or acrylic acid ester. The definition and use of "(meth)" is hereinafter as described above. For the (meth)acrylic acid ester monomer, alkyl (meth)acrylate having a linear, branched, or cyclic alkyl moiety having 1 to 20 carbon atoms is used. Preferably, alkyl (meth)acrylate having an alkyl moiety having 1 to 6 carbon atoms is used.

Specifically, examples of the (meth)acrylic acid ester monomer include methyl (meth)acrylate, ethyl (meth)acrylate, n-propyl (meth)acrylate, iso-propyl (meth)acrylate, n-butyl (meth)acrylate, iso-butyl (meth)acrylate, sec-butyl (meth)acrylate, tert-butyl (meth)acrylate, n-pentyl (meth)acrylate, n-hexyl (meth)acrylate, n-heptyl (meth)acrylate, 2-ethylhexyl (meth)acrylate, n-octyl (meth)acrylate, iso-nonyl (meth)acrylate, n-dodecyl (meth)acrylate, n-octadecyl (meth)acrylate, and cyclohexyl (meth)acrylate. For the (meth)acrylic acid ester monomer, preferably, methyl (meth)acrylate is used, more preferably, methyl methacrylate (MMA) is used.

Examples of the aromatic vinyl monomer include styrene, p-methylstyrene, o-methylstyrene, and α-methylstyrene. For the aromatic vinyl monomer, preferably, styrene is used.

Examples of the nitrile monomer include acrylonitrile, and methacrylonitrile.

Examples of the vinyl ester monomer include vinyl acetate, and vinyl propionate. Examples of the maleic acid ester monomer include dimethyl maleate, diethyl maleate, and dibutyl maleate. Examples of the vinyl halide include vinyl chloride, and vinyl fluoride.

A percentage of the monofunctional vinyl monomer in the total amount of the monofunctional vinyl monomer and the polyfunctional vinyl monomer is 10% by mass or more and 95% by mass or less. The percentage of the monofunctional vinyl monomer in the total amount of the monofunctional vinyl monomer and the polyfunctional vinyl monomer is preferably 55% by mass or more, more preferably 60% by mass or more, even more preferably 70% by mass or more, particularly preferably 75% by mass or more. Further, the percentage of the monofunctional vinyl monomer in the total amount of the monofunctional vinyl monomer and the polyfunctional vinyl monomer is preferably 90% by mass or less, more preferably 85% by mass or less.

When the percentage of the monofunctional vinyl monomer is less than the above-described lower limit, the degree of crosslinking excessively increases. This eliminates a degree of freedom of polymer chains at an initial stage of polymerization, which is likely to form a void. Therefore, a release rate of the organic ultraviolet absorber and the radical scavenger in the resin molded article becomes excessively high. When the percentage of the monofunctional vinyl monomer is 0% by mass, the vinyl monomer component does not contain a monofunctional vinyl monomer but contains only a polyfunctional vinyl monomer. For this reason, the degree of crosslinking becomes excessively high and the release rate of the organic ultraviolet absorber and the radical scavenger in the resin molded article becomes excessively high.

On the other hand, when the percentage of the monofunctional vinyl monomer exceeds the above-described upper limit, the degree of crosslinking becomes excessively low. This deforms or collapses the additive for resin kneading during molding of a resin composition (to be described later). That is, in the molding of the resin molded article, the organic ultraviolet absorber and/or the radical scavenger is/are released out of the additive for resin kneading. In other words, the organic ultraviolet absorber and/or the radical scavenger cause(s) bleeding. As a result, the resin molded article cannot exhibit ultraviolet ray absorbing property and/or deterioration-preventing property.

When the percentage of the monofunctional vinyl monomer is 100% by mass, the vinyl monomer component does not contain a polyfunctional vinyl monomer but contains only a monofunctional vinyl monomer. Therefore, the organic ultraviolet absorber and/or the radical scavenger tend(s) to cause bleeding without crosslinking.

The polyfunctional vinyl monomer contains two or more polymerizable carbon-carbon double bonds per molecule. Preferably, the polyfunctional vinyl monomer contains two polymerizable carbon-carbon double bonds per molecule. The polyfunctional vinyl monomer can be referred to as a crosslinkable vinyl monomer. Examples of the polyfunctional vinyl monomer include poly(meth)acrylate, divinyl monomer, and allyl monomer. These can be used alone or in combination.

Examples of the poly(meth)acrylate include di(meth)acrylate, and poly(meth)acrylate having three or more (meth)acrylates.

Examples of the di(meth)acrylate include ethylene glycol di(meth)acrylate, diethylene glycol di(meth)acrylate, dipropylene glycol di(meth)acrylate, 1,3-propanediol di(meth)acrylate, 1,4-butanediol di(meth)acrylate, and 1,5-pentanediol di(meth)acrylate. Preferably, ethylene glycol di(meth)acrylate is used, more preferably, ethylene glycol dimethacrylate (EGDMA) is used.

Examples of the poly(meth)acrylate having three or more (meth)acrylates include trimethylolpropane tri(meth)acrylate, and pentaerythritol tetra(meth)acrylate.

Examples of the divinyl monomer include divinylbenzene (DVB).

Examples of the allyl monomer include allyl (meth)acrylate, and triallyl (iso)cyanurate.

For the polyfunctional vinyl monomer, poly(meth)acrylate and divinyl monomer are used in terms of uniform crosslinking.

The percentage of the polyfunctional vinyl monomer in the total amount of the monofunctional vinyl monomer and the polyfunctional vinyl monomer is, for example, 5% by mass or more, preferably 10% by mass or more, more preferably 15% by mass or more. Further, the percentage of the polyfunctional vinyl monomer in the total amount of the monofunctional vinyl monomer and the polyfunctional vinyl monomer is, for example, 90% by mass or less, preferably 45% by mass or less, more preferably 40% by mass or less, even more preferably 30% by mass or less, particularly preferably 25% by mass or less. The parts by mass of the polyfunctional vinyl monomer relative to 100 parts by mass of the monofunctional vinyl monomer is, for example, 5 parts by mass or more, and for example, 90 parts by mass or less, preferably less than 50 parts by mass. When the percentage and/or the parts by mass of the polyfunctional vinyl monomer is/are the above-described lower limit or more, it is possible to suppress excessive lowering of the degree of crosslinking and to suppress bleeding of the organic ultraviolet absorber and/or the radical scavenger. When the percentage and/or the parts by mass of the polyfunctional vinyl monomer is/are the above-described upper limit or less, it is possible to suppress an excessive increase in the degree of crosslinking and to suppress an excessive rise of the release rate of the organic ultraviolet absorber and the radical scavenger in the resin molded article.

A method for producing the additive for resin kneading is not particularly limited. Specifically, for a polymerization method, suspension polymerization is used. Operation of the suspension polymerization, and a polymerization initiator, a dispersant, and an emulsifier used therein are described in detail in, for example, Japanese Unexamined Patent Publication Nos. 2012-207012, 2012-207013, and 2016-011299.

For example, a hydrophobic solution containing the organic ultraviolet absorber and/or the radical scavenger, the vinyl monomer component, and a polymerization initiator is prepared. Separately, a liquid containing a dispersant, an emulsifier, and water is prepared. Thereafter, the hydrophobic solution is aqueously dispersed in the liquid. In this manner, an aqueous dispersion is prepared. The aqueous dispersion is then heated. Therefore, suspension polymerization is performed. The resulting reaction solution is then cooled. The cooled reaction solution is then dried.

When the hydrophobic solution is aqueously dispersed as described above, for example, a disperser such as a homomixer (homogenizing mixer), an ultrasonic homogenizer, a pressurized homogenizer, a milder, or a porous membrane injection disperser is used, and preferably, a homomixer is used.

For drying, for example, spray-dry (spray drying), vacuum drying, being left at room temperature (25°C) are used. Preferably, spray drying is used.

Before vacuum drying and being left at room temperature, a solid take-out step can be performed. In the solid take-out step, for example, centrifugal dehydration, filter press, or the like is performed.

After vacuum drying and being left at room temperature, a pulverizing step can be performed. In the pulverizing step, agglomerated additive for resin kneading is torn apart.

It should be noted that vacuum drying and drying at room temperature may include fluidization and drying. After being subjected to fluidization and drying, the additive for resin kneading may not be subjected to the pulverizing step.

Thus, the additive for resin kneading is obtained in the form of powder particles.

The additive for resin kneading is added to a resin and then molded into a resin molded article. The resin is not particularly limited. Examples of the resin include thermoplastic resins. Examples of the thermoplastic resin include polyolefin-based resin and elastomer, silicone resin, fluorine resin, polystyrene resin, modified polyphenylene ether resin, ABS resin, vinyl chloride resin, acrylic resin, vinyl acetate resin, thermoplastic polyester resin, thermoplastic urethane resin, polyamide resin, and polycarbonate resin. These can be used alone or in combination of two or more. Preferably, polyolefin-based resin and elastomer are used. Examples of the polyolefin-based resin include polyolefin resins such as low-density polyethylene (including linear low-density polyethylene), high-density polyethylene, paraffin, polypropylene, and ethylene-propylene copolymer resin; olefin-diene copolymers such as ethylene-propylene-diene copolymer resin, butadiene copolymer thermoplastic elastomer (including SBS and SEBS), and isoprene copolymer thermoplastic elastomer (including SIS and SEPS); and olefin-vinyl monomer copolymer resins such as ethylene-vinyl acetate copolymer resin, ethylene-vinyl chloride copolymer resin, and ionomer resin. For the polyolefin-based resin and elastomer, preferably, polyolefin resin is used.

A percentage of the additive for resin kneading in the resin molded article is, for example, 0.1% by mass or more, preferably 1% by mass or more, and for example, 50% by mass or less, preferably 30% by mass or less, more preferably 25% by mass or less, even more preferably 20% by mass or less. The parts by mass of the total amount of the organic ultraviolet absorber and the radical scavenger relative to the resin is, for example, 0.01 parts by mass or more, preferably 0.1 parts by mass or more, and for example, 5 parts by mass or less, preferably 1 part by mass or less.

To prepare the resin composition, for example, an additive for resin and a resin are dry-blended (blended) and then melt-kneaded to prepare a resin composition as a compound. Alternatively, the resin composition may be prepared by temporarily melt-kneading an additive for resin and a resin to prepare a master batch containing the additive for resin at a higher ratio relative to the resin, and then melt-kneading the master batch and the resin.

When the above-described resin is paraffin, a leaching ratio of the total amount of the organic ultraviolet absorber and the radical scavenger in the additive for resin kneading contained in the resin composition is, for example, 50% by mass or less, preferably 40% by mass or less, more preferably 35% by mass or less, even more preferably 30% by mass or less, particularly preferably 20% by mass or less, and for example, 1% by mass or more, preferably 2% by mass or more. When the leaching ratio is the above-described upper limit or less, it is possible to suppress an excessive release of the organic ultraviolet absorber and the radical scavenger to the resin. For this reason, the resin molded article is excellent in light resistance for a long period of time. When the leaching ratio is the above-described lower limit or more, it is possible to release the organic ultraviolet absorber and the radical scavenger to the resin. For this reason, the resin molded article is excellent in light resistance. A method for measuring the leaching ratio of the total amount of the organic ultraviolet absorber and the radical scavenger will be described in Examples.

Thereafter, the resin molded article is fabricated from the resin composition. A molding method is not particularly limited. Examples of the molding method include extrusion, injection molding, transfer molding, vacuum molding, blow molding, inflation molding, press molding, calendering, foam molding, powder molding, profile molding, and casting for molding pipes, tubes, covered wires, sheets, films, rods, ropes, threads, and the like.

The resin molded article is not particularly limited. Examples of the resin molded article include housings for household electrical appliances, electronic devices, and image display devices; and automobile interior equipment. Examples of the resin molded article also include construction materials such as exterior materials (in particular, for housing), interior materials (including wall paper, etc.), ceiling materials, and floor materials; paper products; ligneous materials; wood products; plastic products; films and sheets; cables and pipes; vessels and packages; fiber materials such as threads, ropes, pulps, nets, clothing, and nonwoven fabrics; filters; disks; lenses; fasteners; medical devices; and decorative laminated sheets.

The powder particles are also applicable to applications other than the additive for resin kneading. For example, the powder particles can be directly added to industrial products other than resin molded articles, without being kneaded in the resin. Examples of such industrial products include coating materials; adhesives; inks; fillers such as a sealing agent and a caulking agent; resin emulsions; and coating agents.

### [Effects of additive for resin kneading]

The additive for resin kneading can suppress agglomeration, having excellent property of preventing the resin molded article from deteriorating due to ultraviolet rays, and suppress deterioration in strength of and bleeding from the resin molded article.

More specifically, since the additive for resin kneading has a median size of 1 µm or more, it is less likely to agglomerate. For this reason, the light resistance of the resin molded article is sufficiently improved. Since the additive for resin kneading has a median size of 100 µm or less, even though the additive for resin kneading is added to a resin, it is possible to prevent stress applied to the resin molded article from being extremely concentrated. For this reason, the resin molded article is excellent in strength.

Since the percentage of the total amount of the organic ultraviolet absorber and the radical scavenger in the additive for resin kneading is 20% by mass or more, a small amount of the additive for resin kneading may be added to the resin in order to ensure ultraviolet absorption capacity and/or radical scavenging capacity in the resin molded article. This can suppress reduction of the proportion of the resin in the resin molded article. Therefore, the resin molded article can exhibit sufficient performance inherent in resin.

In this additive for resin kneading, the percentage of the monofunctional vinyl monomer in the total amount of the monofunctional vinyl monomer and the polyfunctional vinyl monomer is 10% by mass or more. This can suppress excessive increase in the degree of crosslinking. Therefore, the degree of freedom of the polymer can be ensured at the initial stage of polymerization. This allows formation of a void to be suppressed. As a result, it is possible to suppress excessive increase in the release rate of the organic ultraviolet absorber and the radical scavenger in the resin molded article. In this additive for resin kneading, the percentage of the monofunctional vinyl monomer in the total amount of the monofunctional vinyl monomer and the polyfunctional vinyl monomer is 95% by mass or less. This can suppress deformation or collapse of the additive for resin kneading during molding subsequent to composing of the resin composition. As a result, it is possible to suppress bleeding of the organic ultraviolet absorber and/or the radical scavenger. Examples

The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF THE EMBODIMENTS". Further, "%" means "% by mass" unless otherwise specified.

Details of the components used in Examples and Comparative Examples will be described below.

· ADK STAB 1413: Benzophenone-based ultraviolet absorber, solid at 25°C, manufactured by ADEKA Corporation
· Tinuvin 99-2: Benzotriazole-based ultraviolet absorber, purity: 95%, liquid at 25°C, manufactured by BASF
· Tinuvin 460: Triazine-based ultraviolet absorber, solid at 25°C, manufactured by BASF
· ADK STAB LA-63P: Hindered amine-based radical scavenger, solid at 25°C, manufactured by ADEKA Corporation
· Tinuvin 292: Hindered amine-based radical scavenger, liquid at 25°C, manufactured by BASF
· Irganox 1010: Hindered phenol-based radical scavenger, solid at 25°C, manufactured by BASF
· MMA: Methyl methacrylate, monofunctional vinyl monomer, trade name: "Light Ester M" (Light Ester is a registered trademark), manufactured by Kyoeisha Chemical Co., Ltd.
· Styrene: Styrene monomer, monofunctional vinyl monomer, Wako special grade reagent, manufactured by FUJIFILM Wako Pure Chemical Corporation
· EGDMA: Ethylene glycol dimethacrylate, polyfunctional vinyl monomer, trade name: "Light Ester EG" (Light Ester is a registered trademark), manufactured by Kyoeisha Chemical Co., Ltd.
· DVB: Divinylbenzene, polyfunctional vinyl monomer, mixture of isomers, purity: 93% or more, manufactured by FUJIFILM Wako Pure Chemical Corporation
· PEROYL L: Trade name, dilauroyl peroxide, polymerization initiator, manufactured by NOF Corporation
   · PERHEXL O : Trade name, t-hexyl peroxy-2-ethylhexanoate, polymerization initiator, manufactured by NOF Corporation
· Pronon 208: Trade name, polyoxyethylene polyoxypropylene block copolymer, emulsifier, manufactured by NOF Corporation
· Poval 22-88: Trade name, partially saponified polyvinyl alcohol, dispersant, manufactured by Kuraray Co., Ltd.
· DEMOL NL: Trade name, 41% aqueous solution of sodium naphthalene sulfone formaldehyde condensates, dispersant, manufactured by Kao Corporation

### Example 1

A container was charged with 15.63 parts by mass of ADK STAB 1413, 15.63 parts by mass of ADK STAB LA-63P, 25.00 parts by mass of MMA, 6.25 parts by mass of EGDMA, and 0.25 parts by mass of PEROYL L, and the charged mixture was stirred at room temperature (25°C) to prepare a homogeneous hydrophobic solution.

Separately, a beaker was charged with 161.23 parts by mass of deionized water, 0.15 parts by mass of DEMOL NL, 0.63 parts by mass of a 1% aqueous solution of Pronon 208, and 25.00 parts by mass of a 10% aqueous solution of Poval 22-88, and the charged mixture was stirred at room temperature to prepare a homogeneous aqueous solution.

Then, the hydrophobic solution was added to the aqueous solution in the beaker, and then dispersed in the aqueous solution by stirring at a rotational speed of 3500 min⁻¹ for 5 minutes using a T. K. homogenizing mixer MARK model 2.5 (manufactured by PRIMIX Corporation) to prepare an aqueous dispersion.

Thereafter, the aqueous dispersion was transferred to a four-neck flask equipped with a stirrer, a reflux condenser, a thermometer, and a nitrogen inlet tube, and while stirring at a peripheral speed of 18.9 m/min under a stream of nitrogen by a 6 cm diameter stirrer, the four-neck flask was allowed to warm using a water bath to perform suspension polymerization. Polymerization was started at the time when the temperature reached 55°C, and then the suspension polymerization was continuously performed at 60±2°C for 1 hour, and at 70±2°C for 4 hours. Subsequently, the water bath was warmed to raise the temperature of the reaction solution to 80±2°C, and the reaction solution was aged for 2 hours. Thereafter, the reaction solution was cooled to 30°C or less to form a suspension containing an additive for resin kneading.

Then, the suspension was spray-dried using a spray dryer (L-8i, manufactured by Ohkawara Kakohki Co., Ltd.) to obtain the additive for resin kneading in the form of powder particles. Set conditions of the spray dryer include an atomizer rotational speed of 24000 min⁻¹ and an inlet temperature of 120°C.

### Examples 2 to 11 and Comparative Examples 1 to 8

The same treatment as in Example 1 was performed to obtain an additive for resin kneading. It should be noted that the blending formulation and treatment were changed as described in Tables 1 and 2. In Comparative Example 1, during drying of the suspension, the additive for resin kneading was agglomerated and fused. Even though such additive for resin kneading was torn apart, it failed to be prepared in the form of powder particles suitable for blending with a resin to be described later. In Comparative Example 4, ADK STAB 1413 and ADK STAB LA-63P were not dissolved in the vinyl monomer component, failing to prepare a hydrophobic solution. Therefore, suspension polymerization was not able to be performed, thus failing to obtain powder particles. In Comparative Example 5, resins were mutually fused due to the Tinuvin 99-2 (liquid form), thereby failing to obtain powder particles.

### [Evaluation]

The following evaluations were performed for the additives for resin kneading of the Examples and Comparative Examples, and resin molded articles containing such additives. These results are shown in Tables 1 and 2.

### [Evaluation of additive for resin kneading]

### <Polymerizability>

In Comparative Example 4, a hydrophobic solution was not able to be prepared. For this reason, suspension polymerization was not able to be performed. Therefore, the polymerizability was evaluated as "bad". On the other hand, in the other Comparative Examples and all the Examples, suspension polymerization was able to be performed. Therefore, the polymerizability was evaluated as "good".

### <Median size of additive for resin kneading>

The median size of the additive for resin kneading was determined by measuring the suspension by a laser diffraction scattering type particle size distribution measuring apparatus LA-960V2 (manufactured by HORIBA, Ltd.).

### <Proportion of total amount of organic ultraviolet absorber and radical scavenger in powder particles>

The proportion of the total amount of the organic ultraviolet absorber and the radical scavenger in the powder particles was determined. Specifically, the total amount of the organic ultraviolet absorber and the radical scavenger in the form of powder particles was extracted with tetrahydrofuran, and using at least one selected from the group consisting of HPLC, GPC, and GC, the mass percentages of the organic ultraviolet absorber and the radical scavenger were measured. Conditions of the mobile phase and the measuring apparatus are as follows.

### <HPLC>

Mobile phase : Acetonitrile/water = 8/2 (based on mass)
Column : YMC-Pack ODS-A (manufactured by YMC Co., Ltd.)
Column temperature: 40°C
Detector : Photodiode array detector (SPD-M20A, manufactured by Shimadzu Corporation)

### <GPC>

Mobile phase : Tetrahydrofuran
Column : KF-801 (manufactured by Showa Denko K. K.)
Column temperature: 40°C
Detector : Differential refractive index detector (RID-M20A, manufactured by Shimadzu Corporation)

### <GC>

Mobile phase : High-purity He
Column : Rtx-5 Amine (manufactured by Restek Corporation)
Column temperature : 300°C
Detector : Mass spectrometer (GCMS-QP2010 Ultra, manufactured by Shimadzu Corporation)

### <Releasability>

The amount 0.1 g of the additive for resin kneading was measured and placed in a 1 K bottle, and 2.5 g of liquid paraffin (MORESCO-WHITE P-70, average molecular weight: 323, dynamic viscosity: 12.56 mm²/s (40°C), density: 0.843 g/cm³ (15°C), manufactured by MORESCO Corporation) was added thereto. The added mixture was allowed to stand for 1 day, and thereafter filtered through a 0.45 µm filter. Then, a total amount of the organic ultraviolet absorber and the radical scavenger that had been released in the liquid paraffin was measured using at least one selected from the group consisting of HPLC, GPC, and GCMS. In this manner, the total leaching ratio of the organic ultraviolet absorber and the radical scavenger was determined.

### [Evaluation of resin molded article]

To evaluate pellets, first, the additive for resin kneading was blended with a resin. The blending was performed as follows.

The additive for resin kneading was dry-blended with a low-density polyethylene resin ("NOVATEC LD" LF441MD1, MFR: 2.0 g/10 min, density: 0.924 g/cm³, manufactured by Japan Polyethylene Corporation) to obtain a resin composition. The total parts by mass of the organic ultraviolet absorber and the radical scavenger relative to 100 parts by mass of the low-density polyethylene resin was set to 1.0 part by mass. Thereafter, the resin composition was kneaded at 160°C using a twin-screw extruder (Process 11 bench-scale twin screw extruder, manufactured by Thermo Fisher Scientific Inc.) to form pellets (resin molded articles).

### <Kneading resistance>

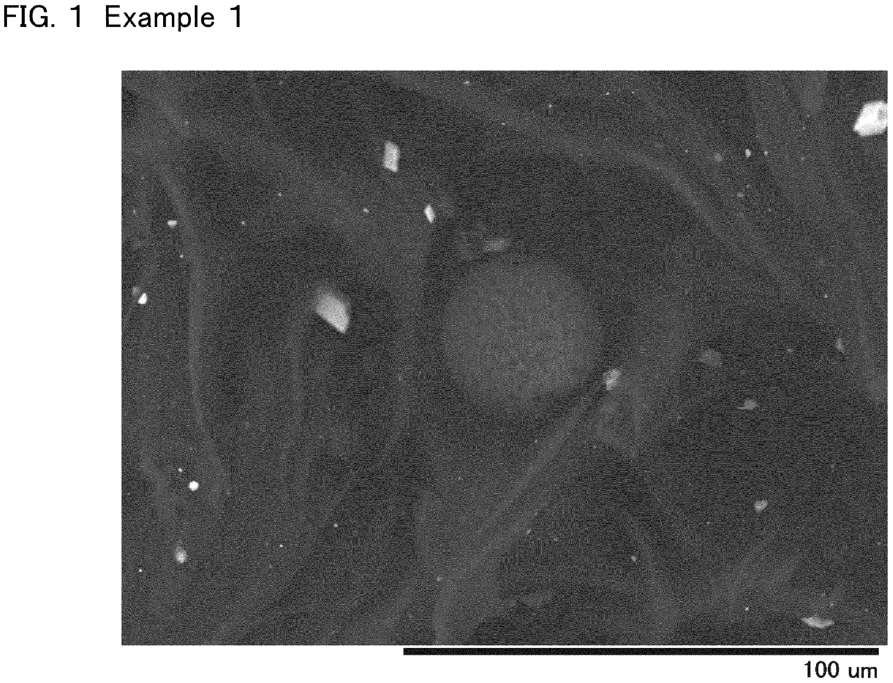

The state of the resin additive for resin kneading in the resin molded article was observed by a simple tabletop SEM (Miniscope TM-3000, manufactured by Hitachi High-Tech Corporation). FIGS. 1 to 3 show image-processed SEM photographs in Example 1, Comparative Example 6, and Comparative Example 7, respectively.

### <Measurement of residual ratio of total amount of organic ultraviolet absorber and radical scavenger>

The total amount of the organic ultraviolet absorber and the radical scavenger in the pellets was extracted with tetrahydrofuran. A total of the organic ultraviolet absorber and the radical scavenger in the extract was measured using at least one selected from the group consisting of HPLC, GPC, and GCMS, and the residual ratio of the total amount of the organic ultraviolet absorber and the radical scavenger was evaluated. Specific extraction conditions are as follows.
Weighed amount of pellets: 0.5 g
Amount of tetrahydrofuran: 5 mL
Extraction time: 3 days

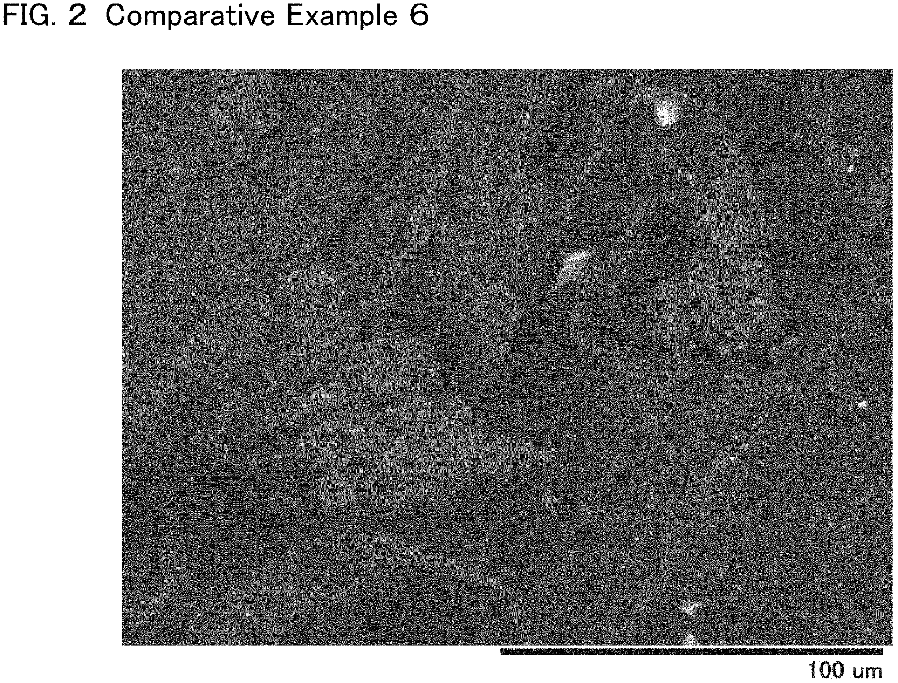

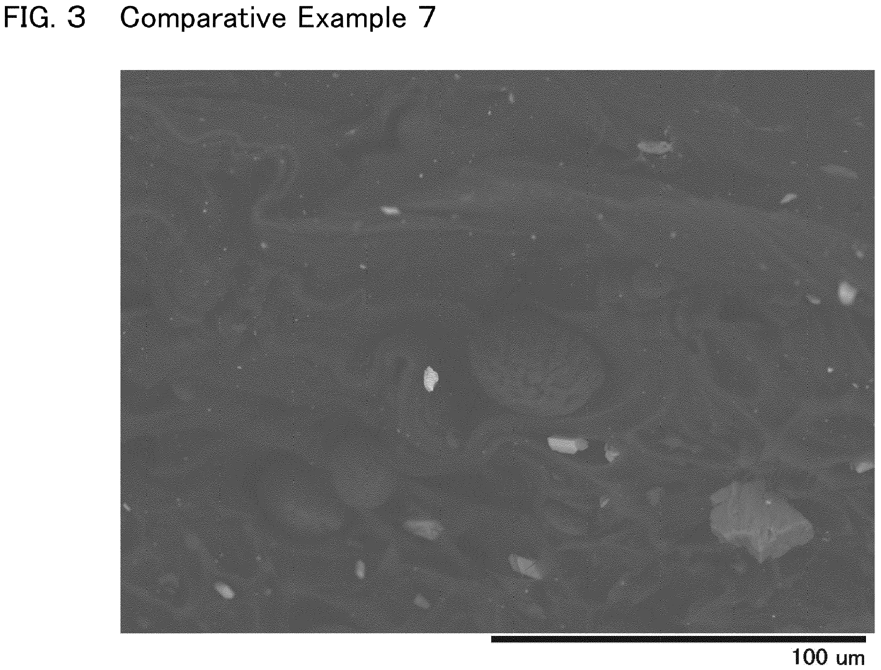

As can be seen from FIG. 2, the additive for resin kneading of Comparative Example 6 was collapsed. As can be seen from FIG. 3, the additive for resin kneading of Comparative Example 7 was partially collapsed.

In contrast, as can be seen from FIG. 1, the additive for resin kneading of Example 1 kept the shape of powder particles. Though not shown, the additive for resin kneading of Example 3 also kept the shape of powder particles.

### <Izod impact test of resin molded article>

The pellets were again molten by the above-described twin-screw extruder and were molded into a rod-like resin molded article having a length of 80 mm, a width of 10 mm, and a thickness of 4 mm by an injection molding machine Mini Jet Pro manufactured by Thermo Fisher Scientific Inc. A notch was made in the resin molded article using a notching machine (manufactured by Yasuda Seiki Seisakusho, Ltd.). The notch had a notch depth of 2 mm at the center in the longitudinal direction. An Izod impact strength was measured at - 40°C in accordance with JIS K7110. The impact resistance of the resin molded article was evaluated based on the following criteria.
Good: The Izod impact strength was 35.0 J/m or more.
Bad: The Izod impact strength was less than 35.0 J/m.

### <Light resistance test of resin molded article>

The pellets were dry-blended with a low-density polyethylene resin ("NOVATEC LD" LF441MD), and the blended mixture was molten by a twin-screw extruder (MiniCTW, manufactured by Thermo Fisher Scientific Inc.) and was molded into test pieces having a length of 50 mm, a width of 10 mm, and a thickness of 1 mm by an injection molding machine Mini Jet of Thermo Fisher Scientific Inc. The parts by mass of the organic ultraviolet absorber and the parts by mass of the radical scavenger, relative to 100 parts by mass of the low-density polyethylene resin, were each adjusted to 0.2 parts by mass. The test pieces were subjected to an accelerated light resistance test at 180 W/m² for 1600 hours using a Super Xenon Weather Meter SX75 (manufactured by Suga Test Instruments Co., Ltd.), and the light resistance was evaluated according to the following criteria.
Good: No crack was visually observed in the test piece.
Bad: A crack was visually observed in the test piece.

### <Discussion of Comparative Examples>

In Comparative Example 1, the median size of the additive for resin kneading is considered to be small. For this reason, particles tend to be firmly agglomerated together during drying. As a result, it is deduced that the light resistance of the resin molded article cannot be sufficiently improved.

In Comparative Example 2, the median size of the additive for resin kneading exceeds 100 µm. For this reason, stress applied to the resin molded article has been extremely concentrated, and thus impact resistance has been excessively lowered.

In Comparative Example 3, the percentage of the total amount of the organic ultraviolet absorber and the radical scavenger in the additive for resin kneading is less than 20% by mass. For this reason, a large amount of the additive for resin kneading needs be added to the low-density polyethylene resin in order to ensure ultraviolet absorption capacity and radical scavenging capacity in the resin molded article. This reduces the proportion of the low-density polyethylene resin in the resin molded article, and the resin molded article cannot exhibit sufficient strength inherent in the low-density polyethylene resin.

In Comparative Example 4, the proportion of the total amount of the organic ultraviolet absorber and the radical scavenger to the total amount of the vinyl monomer component, the organic ultraviolet absorber, and the radical scavenger exceeds 80% by mass. For this reason, the organic ultraviolet absorber and the radical scavenger are not sufficiently dissolved mutually with the monomer component. As a result, polymerization stability is poor, thus making it impossible to form copolymers. Therefore, the additive for resin kneading has not been able to be obtained.

Further, in Comparative Example 5, the proportion of the total amount of the organic ultraviolet absorber and the radical scavenger to the total amount of the vinyl monomer component, the organic ultraviolet absorber, and the radical scavenger exceeds 80% by mass, and the organic ultraviolet absorber and the radical scavenger are liquid at 25°C. For this reason, particles in large amounts of the organic ultraviolet absorber and the radical scavenger are mutually fused, thus making it impossible to obtain the additive for resin kneading in the form of powder particles.

In Comparative Examples 6 and 7, the percentage of the monofunctional vinyl monomer in the total amount of the monofunctional vinyl monomer and the polyfunctional vinyl monomer exceeds 95% by mass. For this reason, the degree of crosslinking is low.

As a result, deformation or collapse occurs during kneading and molding subsequent to composing of the resin composition. Therefore, bleeding occurs in the resin molded article.

In Comparative Example 8, the percentage of the monofunctional vinyl monomer in the total amount of the monofunctional vinyl monomer and the polyfunctional vinyl monomer is less than 10% by mass. For this reason, the degree of crosslinking excessively increases. As a result, the degree of freedom of polymer chains is eliminated at the initial stage of polymerization, which is likely to form a void. Therefore, the release rate of the organic ultraviolet absorber and the radical scavenger in the resin molded article is excessively high.

**[Table 1]**

| TABLE 1 | | | | | | | | | | | | | | |
|---|---|---|---|---|---|---|---|---|---|---|---|---|---|---|
| Formulation of additive for resin kneading | | | Nature | Example 1 | Example 2 | Example 3 | Example 4 | Example 5 | Example 6 | Example 7 | Example 8 | Example 9 | Example 10 | Example 11 |
| Ultraviolet absorber (pts. mass) | | ADK STAB 1413 | Solid | 15.63 | 15.63 | 15.63 | 15.63 | 15.63 | 31.25 | - | - | - | - | 7.82 |
| | | Tinuvin 99-2 | Liquid | | - | - | - | - | - | - | 31.25 | - | - | - |
| | | Tinuvin 460 | Solid | | - | - | - | - | - | - | - | - | 15.63 | - |
| | | Content of ultraviolet absorber in additive for resin kneading (mass%) | | 25 | 25 | 25 | 25 | 25 | 50 | - | 50 | - | 25 | 12.5 |
| Radical scavenger (pts. mass) | | ADK STAB LA-63P | Solid | 15.63 | 15.63 | 15.63 | 15.63 | 15.63 | - | 31.25 | - | - | - | - |
| | | Tinuvin 292 | Liquid | - | - | - | - | - | - | - | - | 31.25 | - | - |
| | | Irganox 1010 | Solid | - | - | - | - | - | - | - | - | - | - | 7.82 |
| | | Content of radical scavenger in additive for resin kneading (mass%) | | 25 | 25 | 25 | 25 | 25 | - | 50 | - | 50 | - | 12.5 |
| Porportion of total amount of organic ultraviolet absorber and radical scavenger in additive for resin kneading (mass%) | | | Based on charged amount | 50 | 50 | 50 | 50 | 50 | 50 | 50 | 50 | 50 | 25 | 25 |
| | | | Measured value (HPLC+GPC+GCMS) | 50 | 50 | 50 | 50 | 50 | 50 | 50 | 50 | 50 | 25 | 25 |
| Polymer | Vinyl monomer component (pts. mass) | Monofunctional vinyl monomer | MMA | 25.00 | 25.00 | 29.69 | 15.63 | 3.13 | 25.00 | 25.00 | 25.00 | 25.00 | - | 25.00 |
| | | | Styrene | | | - | - | - | | - | - | - | 29.69 | - |
| | | | Percentage (%) | 80 | 80 | 95 | 50 | 10 | 80 | 80 | 80 | 80 | 95 | 80 |
| | | Polyfunctional vinyl monomer | EGDMA | 6.25 | 6.25 | 1.56 | 15.63 | 28.13 | 6.25 | 6.25 | 6.25 | 6.25 | - | 6.25 |
| | | | DYE | - | - | - | - | - | - | - | - | - | 1.56 | - |
| | | Polymerization initiator | PEROYL L | 0.25 | 0.25 | 0.25 | 0.25 | 0.25 | 0.25 | 0.25 | 0.25 | 0.25 | - | 0.25 |
| | | | PERHEXL O | - | - | - | - | - | - | - | - | - | 0.28 | - |
| Rotational speed of stirrer during preparation of aqueous dispersion (min⁻¹) | | | | 3500^{∗1} | 8000 | 3500 | 3500 | 3500 | 3500 | 3500 | 3500 | 3500 | 4000 | 3500 |
| Evaluation | Additive for resin kneading | Median size (µm) | | 25.6 | 2.6 | 23.6 | 28.6 | 24.5 | 23.7 | 27.0 | 18.0 | 17.0 | 21.4 | 13.3 |
| | | Polym erizability | | Good | Good | Good | Good | Good | Good | Good | Good | Good | Good | Good |
| | | Leaching ratio (%) (Releasability) | | 5.6 | 3.0 | 2.9 | 21.4 | 44.1 | 12.0 | 0.5 | 32.1 | 36.6 | 5.8 | 2.2 |
| | Resin molded article | Kneading resistance | | Keep shape | Keep shape | Keep shape | Keep shape | Keep shape | Keep shape | Keep shape | Keep shape | Keep shape | Keep shape | Keep shape |
| | | Residual ratio of total amount radical sca of organic ultraviolet absorber and avenger (%) | | 98 | 90 | 100 | 95 | 90 | 96 | 100 | 92 | 91 | 99 | 97 |
| | | Izod impact strength (J/m) (Impact resistance) | | Good | Good | Good | Good | Good | Good | Good | Good | Good | Good | Good |
| | | Light resistance | | Good | Good | Good | Good | Good | Good | Good | Good | Good | Good | Good |
| ^{∗}1 Perip heral speed: 18. .9 m/min | | | | | | | | | | | | | | |

**[Table 2]**

| TABLE 2 | | | | | | | | | | | |
|---|---|---|---|---|---|---|---|---|---|---|---|
| Formulation of additive for resin kneading | | | Nature | Comp. Ex. 1^{∗3} | Comp. Ex. 2 | Comp. Ex. 3 | Comp. Ex. 4^{∗3} | Comp. Ex. 5^{∗3} | Comp. Ex. 6 | Comp. Ex. 7 | Comp. Ex. 8 |
| Ultraviolet absorber (pts. mass) | | ADK STAB 1413 | Solid | 15.63 | 15.63 | 5.63 | 25.01 | - | 15.63 | 15.63 | 15.63 |
| | | Tinuvin 99-2 | Liquid | - | - | - | - | 50.00 | - | - | - |
| | | Content of ultraviolet absorber in additive for resin kneading (mass%) | | 25 | 25 | 9 | 40 | 80 | 25 | 25 | 25 |
| Radical scavenger (pts. mass) | | ADK STAB LA-63P | Solid | 15.63 | 15.63 | 5.63 | 25.01 | - | 15.63 | 15.63 | 15.63 |
| | | Content of radical scavenger in additive for resin kneading (mass%) | | 25 | 25 | 9 | 40 | - | 25 | 25 | 25 |
| Porportion of total amount of organic ultraviolet absorber and radical scavenger in additive for resin kneading (mass%) | | | Based on charged amount | 50 | 50 | 18 | 80 | 80 | 50 | 50 | 50 |
| | | | Measured value (HPLC+GPC) | 50 | 50 | 18 | 80 | 76 | 50 | 50 | 50 |
| Polymer | Vinyl monomer component (pts. mass) | Monofunctional vinyl monomer | MMA | 25.00 | 29.69 | 48.69 | 10.00 | 11.88 | 31.25 | 30.63 | 0.00 |
| | | | Percentage (%) | 80 | 95 | 95 | 80 | 80 | 100 | 98 | 0 |
| | | Polyfunctional vinyl monomer | EGDMA | 6.25 | 1.56 | 2.56 | 2.50 | 0.63 | 0.00 | 0.63 | 31.25 |
| | | Polymerization initiator | PEROYL L | 0.25 | 0.25 | 0.25 | 0.25 | 0.25 | 0.25 | 0.25 | 0.25 |
| Rotational speed of stirrer during preparation of aqueous dispersion (min⁻¹) | | | | 12000 | 800 | 3500 | - | 3500 | 3500 | 3500 | 3500 |
| Evaluation | Additive for resin kneading | Median size (µm) | | (0.6) ^{∗2} | 141.5 | - | - | - | 26.1 | 29.9 | 28.5 |
| | | Polymerizability | | Good | Good | Good | Bad | Good | Good | Good | Good |
| | | Leaching ratio (%) (Releasability) | | - | - | - | - | - | 2.0 | 6.0 | 57.3 |
| | Resin molded article | Kneading resistance | | - | - | - | - | - | Collapsed | Partially collapsed | - |
| | | Residual ratio of total amount of organic ultraviolet absorber and radical scavenger (%) | | - | - | - | - | - | - | 84 | - |
| | | Izod impact strength (J/m) (Impact resistance) | | - | Bad | Bad | - | - | - | - | - |
| | | Light resistance | | - | - | - | - | - | - | - | - |
| | | | *2 When aqueously dispersed | | | *3 Failed to obtain powder particles | | | | | |

While the illustrative embodiments of the present invention are provided in the above description, such is for illustrative purpose only and it is not to be construed restrictively. Modification and variation of the present invention that will be obvious to those skilled in the art is to be covered by the following claims.

### Industrial Applicability

The additive for resin kneading is added to a resin and then molded into a resin molded article.

## Claims

1. An additive for resin kneading, comprising:
an organic ultraviolet absorber and/or a radical scavenger; and a polymer having the organic ultraviolet absorber and/or the radical scavenger dispersed,
the additive for resin kneading being in powder particle form, and
having a median size of 1 µm or more and 100 µm or less,
wherein a percentage of a total amount of the organic ultraviolet absorber and the radical scavenger in the additive for resin kneading is 20% by mass or more and 70 % by mass or less,
the polymer is a copolymer of a vinyl monomer component that comprises a monofunctional vinyl monomer comprising only one polymerizable carbon-carbon double bond per molecule, and a polyfunctional vinyl monomer comprising two or more polymerizable carbon-carbon double bonds per molecule, and
a percentage of the monofunctional vinyl monomer in a total amount of the monofunctional vinyl monomer and the polyfunctional vinyl monomer is 10% by mass or more and 95% by mass or less.

2. The additive for resin kneading according to claim 1, wherein the percentage of the monofunctional vinyl monomer is 55% by mass or more.

3. The additive for resin kneading according to claim 1, wherein the median size is 5 µm or more and 30 µm or less.

4. The additive for resin kneading according to claim 2, wherein the median size is 5 µm or more and 30 µm or less.
